# EUROPEAN PATENT SPECIFICATION

(11) **EP 3 748 813 B1**
(45) Date of publication and mention of the grant of the patent: **10.08.2022**
(21) Application number: 20178549.0
(22) Date of filing: 05.06.2020
(51) Int. Cl.: H02K 1/2786, H02K 1/02, H02K 1/278, H02K 7/18

(54) **PERMANENT MAGNET MODULE FOR A PERMANENT MAGNET MACHINE**
PERMANENTMAGNETMODUL FÜR EINE PERMANENTMAGNETMASCHINE
MODULE D'AIMANT PERMANENT POUR MACHINE À AIMANT PERMANENT

(30) Priority: 06.06.2019 CN 201910491728; 06.06.2019 CN 201920852608 U; 06.06.2019 EP 19178773
(43) Date of publication of application: 09.12.2020
(73) Proprietor: Siemens Gamesa Renewable Energy A/S, 7330 Brande (DK)
(72) Inventor: AZAR, Ziad, S10 4ED Sheffield (GB); GU, Yongfeng, 211200 Nanjing city (CN); URDA, Adriana Cristina, 2300 Copenhagen (DK)
(74) Representative: Aspacher, Karl-Georg

(56) References cited:
- EP-A1- 2 555 383
- EP-A1- 3 402 044
- EP-A2- 1 777 795
- DE-A1-102007 038 668
- US-A1- 2018 278 100

## Description

### Field of invention

The present invention relates to the field of reducing eddy current losses in a permanent magnet machine. Particularly, the present invention relates to a permanent magnet module including a support and a magnet for a permanent magnet machine.

### Art Background

An electric machine, such as an electric generator installed in a wind turbine, typically comprises a rotor which rotates relative to a stator around a rotational axis. Stator and rotor are separated from each other by an airgap, circumferentially extended around the rotational axis.

In a permanent-magnet electric machine the rotor comprises a plurality of permanent magnets modules, each module including a baseplate and one or more permanent magnets attached to the baseplate. The baseplate is attached to the rotor body, so that, in operation, the baseplate is interposed between the respective magnet and the rotor body. In each magnet module a cover is typically provided over the permanent magnet(s) to encapsulate the permanent magnet(s). The cover may be made of stainless steel or any other non-magnetic material welded or fixed by other means to the respective baseplate. The stator typically includes a body having stator radial slots longitudinally extending along an axial direction of the stator and an electric circuit comprising a plurality of copper windings housed in the slots.

In a permanent magnet wind turbine generator, the permanent magnet modules mounted on the rotor body are subject to high magnetic fields of different magnitude and frequencies which causes high iron losses in any conducting steel parts. In particular, eddy currents are induced due to asynchronous rotating fields in the airgap. These losses increase the temperatures inside the generator, which reduces performance in terms of torque and power, and also reduces the efficiency of the generator, and as a result lowers the Annual Energy Production (AEP).

In permanent magnet machines in order to reduce eddy current losses, laminated materials may be used in the baseplates. However, such materials are too expensive and largely reduce mechanical strength of magnet module. Soft magnetic composite (SMC) materials may be alternatively used in the baseplates, but this would prevent the cover from being welded to the baseplate. A different fixing solution, which may be more expensive or less practical, would be in this case required.

The document EP 3 402 044 A1 discloses a permanent magnet module for an electrical machine.

It is therefore desirable to provide effective and cost-effective techniques, which may improve the constructional features of permanent magnet modules and reduce the overall losses in a permanent magnet machine.

### Summary of the Invention

This objective may be solved by the permanent magnet module according to the independent claim. Advantageous embodiments of the present invention are described by the dependent claims.

According to the present invention a permanent magnet module for a permanent magnet machine is provided. The permanent magnet module comprises at least a permanent magnet and a baseplate. The baseplate includes at least a first portion and a second portion. The first portion provides an interface for attaching the permanent magnet module to the permanent magnet machine. The second portion is attached to the at least one permanent magnet. The second portion has a structure for reducing eddy current losses or comprises a material for reducing eddy current losses.

According to possible embodiments of the invention, the permanent magnet machine may be an electrical generator. Particularly, but not exclusively, the electrical generator may be used in a wind turbine.

Advantageously, the invention proposes the use of alternative types of materials in the upper second portion of the baseplate, i.e. the portion to which the permanent magnet is attached. This may be particularly advantageous in permanent magnet machine where rotor losses are particularly high, i.e. concentrated winding or fractional slot generators. The first lower portion, which is subject to be attached to the permanent magnet machine, e.g. to the rotor body of an electrical generator, may be efficiently designed to provide mechanical strength.

According to one embodiment of the present invention, the second portion of the baseplate is laminated. Laminations constitute the second portion of the baseplate and are fixed (by means of a glue or other means) to the solid first portion of the baseplate.

According to another embodiment of the present invention, the second portion of the baseplate comprises a soft magnetic composite (SMC) material. The SMC is fixed (by means of a glue or other means) to the solid first portion of the baseplate. The SMC material has a very high electrical resistivity than the standard grade steel, which reduces the iron losses to zero by providing a higher resistance to the eddy currents.

In both the above described embodiments, the lower first portion of the base plate is kept the same, so that the material or structure of the second portion does not affect the assembly of the module in the rotor body. In particular, mechanical strength is not affected. At the same time, the laminated or SMC material contributes significantly in reducing the eddy current losses in the permanent magnet machine.

According to another embodiment of the present invention, at least the second portion of the baseplate comprises high Silicon steel, having a composition including between 2% to 4% of Silicon. High Silicon steel has an electrical resistivity which is 4-6 times higher than the standard grade steel. High Silicon steel reduces the iron losses by minimum of 50% by providing a higher resistance to the eddy currents.

The mechanical properties of High Silicon steel, e.g. Young's modulus, Yield strength hardness and density etc, are similar to (or even higher than) the standard steel and this will not affect the structural performance of the component. The first portion of the baseplate may also comprise high Silicon steel, having a composition including between 2% to 4% of Silicon. In particular, at least the second portion of the baseplate may comprise 60Si2Mn or equivalent (according to the different nomenclatures) steel.

According to the present invention, a permanent magnet module comprises a cover for at least partially covering the permanent magnet, the cover being attached to at least the first portion of the baseplate. Advantageously, the structure and the material of the second portion the baseplate, does not affect the fixing (by welding or other mean) of the cover to the first portion of the baseplate.

According to the present invention, the cover and the first portion of the baseplate comprise a stainless steel.

Advantageously, being the electrical conductivity of stainless steel lower than that of carbon steel, the losses in the baseplate are reduced considerably. The term "Carbon steel" is used in reference to steel which is not stainless steel, in this use "Carbon steel" may include alloy steels. Ferritic stainless steel does not have a significant impact the reluctance of the magnetic circuit as it has a high permeability and therefore still provides a low reluctant path to the magnetic flux. The stainless steel does not corrode in the environment of the inside of a wind turbine, therefore no coating or painting is needed. The welding process between two parts (cover and first portion of the base plate) of the same material is easier to control and permits to achieve a high-quality weld. Therefore, a reduction in the occurrence of welding problems between the baseplate and magnet cover are expected. The second portion of the baseplate may also include stainless steel.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a cross-sectional view of a permanent magnet machine including a plurality of permanent magnet modules according to the present invention.
Fig. 3 shows a frontal circumferential view of a permanent magnet module according to a first exemplary embodiment of the present invention.
Fig. 4 shows a frontal circumferential view of a permanent magnet module according to a second exemplary embodiment of the present invention.

### Detailed Description

The illustrations in the drawings are schematically. It is noted that in different figures, similar or identical elements are provided with the same reference signs.

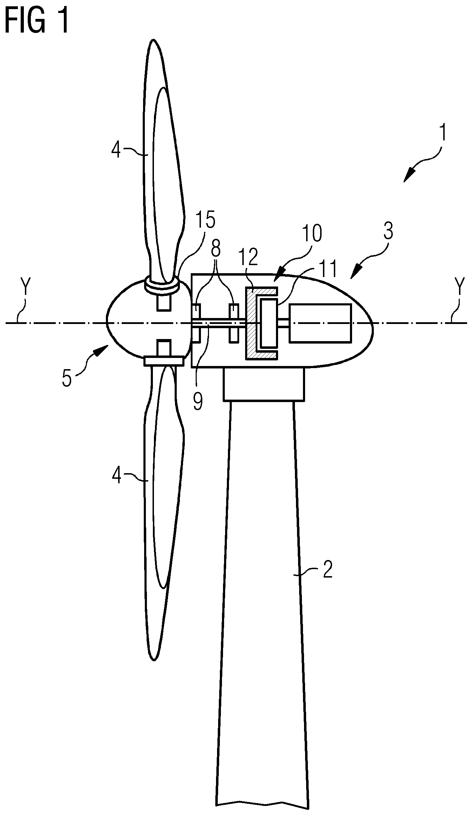

**Figure 1** shows a partial cross-sectional view of a wind turbine 1 including a permanent magnet machine 10, i.e. an electrical generator, which includes a permanent magnet module according to the invention. The permanent magnet machine 10 includes a stator 11 and a rotor 12. The rotor 12 is rotatable with respect to the stator 11 about a longitudinal axis of the permanent magnet machine 10. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the longitudinal axis Y. The permanent magnet machine 10 may be a fractional slot concentrated winding electrical generator.

According to other possible embodiments of the present invention (not represented in the attached figures), the present invention may be applied to any type of permanent magnet electric machines, e.g. radial, axial, etc. The present invention may be applied also to integral-slot electric permanent magnet machine.

A plurality of permanent magnets modules (not visible in Fig-ure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

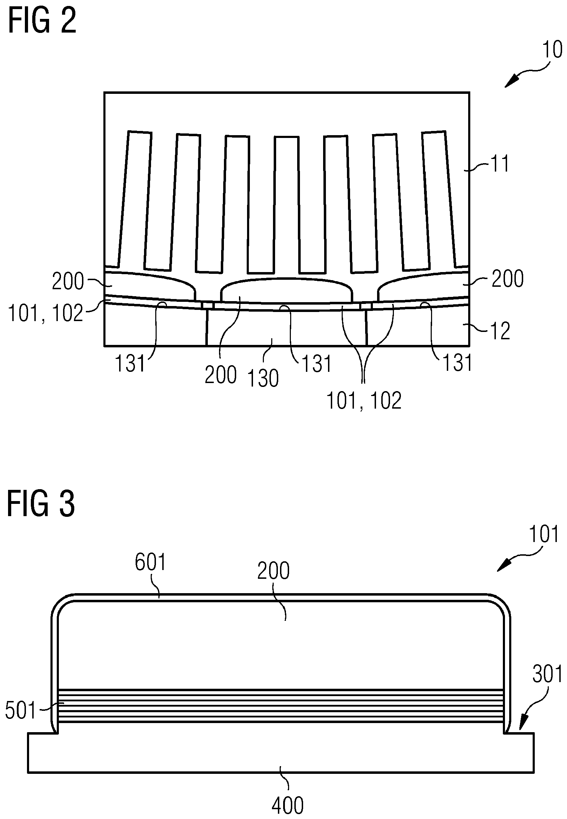

**Figure 2** shows a partial cross-sectional view of the permanent magnet machine 10 including a plurality of permanent magnet modules 101, 102 attached to the rotor 12. The permanent magnet modules 101, 102 are attached to a side of the rotor 12 which faces the stator 11. Each permanent magnet module 101, 102 comprises a permanent magnet 200 and a baseplate 301, 302. According to other embodiment of the present invention (not shown), each permanent magnet module 101, 102 may comprise more than one permanent magnet 200 and more than one baseplate 301, 302. Each of the permanent magnets 200 is attached to a rotor body 130 of the rotor 12 by means of the respective base plate 301, 302. Each base plate 301, 302 of each permanent magnet module 101, 102 is connected to a respective recess 131 provided in the rotor body 130.

**Figure 3** shows a tangential sectional view of a permanent magnet module 101 including a permanent magnet 200 and a respective baseplate 301 attached to the permanent magnet 200. The baseplate 301 includes a first portion 400 providing an interface for attaching the permanent magnet module 101 to the respective recess 131 in the rotor body. The baseplate 301 includes a second portion 501 attached to the first portion 400 on a first side and to the permanent magnet 200 on a second contact side 120, opposite to the first side. In the tangential direction the first portion 400 is larger than the second portion 501, a step being provided therebetween. The second portion 501 is laminated. The permanent magnet module 101 includes a cover 601 covering the permanent magnet 200. The cover 601 is welded to the first portion 400 of the baseplate 301. The cover 601 and the first portion 400 of the baseplate 301 are both made of stainless steel.

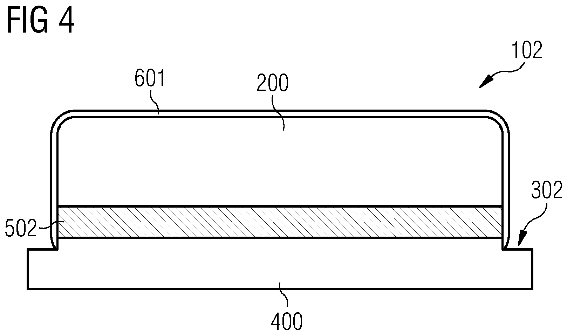

**Figure 4** shows a tangential sectional view of a permanent magnet module 102 including a permanent magnet 200 and a respective baseplate 302 attached to the permanent magnet 200.

The baseplate 302 includes a first portion 400 providing an interface for attaching the permanent magnet module 102 to the respective recess 131 in the rotor body. The baseplate 302 further includes a second portion 502 attached to the first portion 400 on a first side and to the permanent magnet 200 on a second contact side 120, opposite to the first side. The second portion 502 comprises a soft magnetic composite material (SMC). Alternatively, according to another embodiment of the present invention, the second portion 502 of the baseplate 302 comprises high Silicon steel, having a composition including between 2% to 4% of Silicon. For example, the second portion 502 of the baseplate 302 may comprise 60Si2Mn steel or an equivalent steel.

## Claims

1. Permanent magnet module (101, 102) for a permanent magnet machine (10), the permanent magnet module (101, 102) comprising at least a permanent magnet (200) and a baseplate (301, 302), the baseplate (301, 302) including at least a first portion (400) and a second portion (501, 502), the first portion (400) providing an interface for attaching the permanent magnet module (101, 102) to a rotor body of a permanent magnet machine (10) and the second portion (501, 502) being attached to the first portion (400) on a first side and to the at least one permanent magnet (200) on a second side, opposite to the first side, wherein the second portion (501, 502) has a structure or comprises a material for reducing eddy current losses,
**characterized in that** the permanent magnet module (101, 102) comprises a cover (601) for at least partially covering the permanent magnet (200), the cover (601) being attached to at least the first portion (400) of the baseplate (301, 302), wherein the cover (601) and the first portion (400) of the baseplate (301, 302) comprise a stainless steel.

2. Permanent magnet module (101) according to claim 1, wherein at least the second portion (501) of the baseplate (301) is laminated.

3. Permanent magnet module (102) according to claim 1 or 2, wherein at least the second portion (502) of the baseplate (302) comprises a soft magnetic composite material.

4. Permanent magnet module (102) according to claim 1 or 2, wherein at least the second portion (502) of the baseplate (302) comprises high Silicon steel, having a composition including between 2% to 4% of Silicon.

5. Permanent magnet module (102) according to claim 4, wherein at least the second portion (502) of the baseplate (302) comprises 60Si2Mn or equivalent steel.

6. Permanent magnet machine (10) including a plurality of permanent magnet modules (101, 102) according to any of the previous claims.

7. Wind turbine (1) comprising an electrical generator (10) according to claim 6.

## Patentansprüche

1. Permanentmagnetmodul (101, 102) für eine Permanentmagnetmaschine (10), wobei das Permanentmagnetmodul (101, 102) mindestens einen Permanentmagneten (200) und eine Basisplatte (301, 302) umfasst, wobei die Basisplatte (301, 302) mindestens einen ersten Anteil (400) und einen zweiten Anteil (501, 502) einschließt, wobei der erste Anteil (400) eine Schnittstelle zum Befestigen des Permanentmagnetmoduls (101, 102) an einem Rotorkörper einer Permanentmagnetmaschine (10) bereitstellt und der zweite Anteil (501, 502) an dem ersten Anteil (400) an einer ersten Seite und an dem mindestens einen Permanentmagneten (200) an einer zweiten Seite befestigt ist, die der ersten Seite gegenüber liegt, wobei der zweite Anteil (501, 502) eine Struktur aufweist oder ein Material umfasst, um Wirbelstromverluste zu reduzieren,
**dadurch gekennzeichnet, dass** das Permanentmagnetmodul (101, 102) eine Abdeckung (601) umfasst, um den Permanentmagneten (200) mindestens teilweise abzudecken, wobei die Abdeckung (601) an mindestens dem ersten Anteil (400) der Basisplatte (301, 302) befestigt ist, wobei die Abdeckung (601) und der erste Anteil (400) der Basisplatte (301, 302) einen rostfreien Stahl umfassen.

2. Permanentmagnetmodul (101) nach Anspruch 1, wobei mindestens der zweite Anteil (501) der Basisplatte (301) laminiert ist.

3. Permanentmagnetmodul (102) nach Anspruch 1 oder 2, wobei mindestens der zweite Anteil (502) der Basisplatte (302) ein weichmagnetisches Kompositmaterial umfasst.

4. Permanentmagnetmodul (102) nach Anspruch 1 oder 2, wobei mindestens der zweite Anteil (502) der Basisplatte (302) Stahl mit hohem Siliciumgehalt umfasst, der eine Zusammensetzung hat, die zwischen 2 % und 4 % Silicium einschließt.

5. Permanentmagnetmodul (102) nach Anspruch 4, wobei mindestens der zweite Anteil (502) der Basisplatte (302) 60Si2Mn oder gleichwertigen Stahl umfasst.

6. Permanentmagnetmaschine (10), die eine Vielzahl von Permanentmagnetmodulen (101, 102) gemäß einem der vorhergehenden Ansprüche einschließt.

7. Windturbine (1), umfassend einen elektrischen Generator (10) gemäß Anspruch 6.

## Revendications

1. Module d'aimant permanent (101, 102) pour une machine à aimant permanent (10), le module d'aimant permanent (101, 102) comprenant au moins un aimant permanent (200) et une plaque de base (301, 302), la plaque de base (301, 302) comprenant au moins une première partie (400) et une deuxième partie (501, 502), la première partie (400) fournissant une interface pour attacher le module d'aimant permanent (101, 102) à un corps de rotor d'une machine à aimant permanent (10) et la deuxième partie (501, 502) étant attachée à la première partie (400) sur un premier côté et à l'au moins un aimant permanent (200) sur un deuxième côté, opposé au premier côté, dans lequel la deuxième partie (501, 502) a une structure ou comprend un matériau pour réduire les pertes par courants de Foucault,
**caractérisé en ce que** le module d'aimant permanent (101, 102) comprend un couvercle (601) pour couvrir au moins partiellement l'aimant permanent (200), le couvercle (601) étant attaché à au moins la première partie (400) de la plaque de base (301, 302), dans lequel le couvercle (601) et la première partie (400) de la plaque de base (301, 302) comprennent un acier inoxydable.

2. Module d'aimant permanent (101) selon la revendication 1, dans lequel au moins la deuxième partie (501) de la plaque de base (301) est stratifiée.

3. Module d'aimant permanent (102) selon la revendication 1 ou 2, dans lequel au moins la deuxième partie (502) de la plaque de base (302) comprend un matériau composite magnétique doux.

4. Module d'aimant permanent (102) selon la revendication 1 ou 2, dans lequel au moins la deuxième partie (502) de la plaque de base (302) comprend de l'acier à haute teneur en silicium, ayant une composition comprenant entre 2% et 4% de silicium.

5. Module d'aimant permanent (102) selon la revendication 4, dans lequel au moins la deuxième partie (502) de la plaque de base (302) comprend 60Si2Mn ou un acier équivalent.

6. Machine à aimant permanent (10) comprenant une pluralité de modules d'aimant permanent (101, 102) selon l'une des revendications précédentes.

7. Éolienne (1) comprenant un générateur électrique (10) selon la revendication 6.
